(19) **Europäisches Patentamt / European Patent Office / Office européen des brevets**

(11) **EP 3 555 019 B1**

(12) **EUROPÄISCHE PATENTSCHRIFT**

(45) Veröffentlichungstag und Bekanntmachung des Hinweises auf die Patenterteilung:
**29.04.2020 Patentblatt 2020/18**

(21) Anmeldenummer: **17710679.6**

(22) Anmeldetag: **03.03.2017**

(51) Int Cl.:
*C04B 26/02* (2006.01)　　*C08F 218/08* (2006.01)
*C08L 67/06* (2006.01)　　*C04B 26/04* (2006.01)
*C04B 103/56* (2006.01)

(86) Internationale Anmeldenummer:
**PCT/EP2017/054995**

(87) Internationale Veröffentlichungsnummer:
**WO 2018/157938 (07.09.2018 Gazette 2018/36)**

(54) **VERWENDUNG VON VINYLACETAT-COPOLYMEREN ALS SCHWINDMASS-REDUZIERENDER ZUSATZ IN KALTHÄRTENDEN SYSTEMEN**

USE OF VINYL ACTETATE-COPOLYMERS AS A SHRINKAGE-REDUCING ADDITIVE IN COLD-CURING SYSTEMS

UTILISATION DE COPOLYMÈRES D'ACÉTATE DE VINYLE COMME ADDITIFS RÉDUISANT LE RETRAIT DANS DES SYSTÈMES DURCISSANT À FROID

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.10.2019 Patentblatt 2019/43**

(73) Patentinhaber: **Wacker Chemie AG**
**81737 München (DE)**

(72) Erfinder:
• **ZARKA, Michael Tobias**
**84503 Altötting (DE)**

• **WEBER, Karl**
**84508 Burgkirchen (DE)**

(74) Vertreter: **Schuderer, Michael et al**
**Wacker Chemie AG**
**Zentralbereich Patente, Marken und Lizenzen**
**Hanns-Seidel-Platz 4**
**81737 München (DE)**

(56) Entgegenhaltungen:
**WO-A1-2010/108791　　DD-A- 71 072**
**DE-A1- 4 124 441　　DE-A1-102007 047 837**
**DE-A1-102007 055 694　　DE-A1-102009 001 498**

EP 3 555 019 B1

## Beschreibung

Die Erfindung betrifft die Verwendung von Vinylacetat-Copolymeren als Schwindmaß-reduzierender Zusatz (Low Profile Additiv) in kalthärtenden Systemen zur Herstellung von Verbundwerkstoffen, insbesondere in Polymerbeton.

In kalthärtenden Systemen zur Herstellung von Verbundwerkstoffen (Composites), das sind solche welche bei < 60°C, vorzugsweise bei Raumtemperatur das heißt bei Temperaturen ≤ 40°C, aushärten, werden in der Regel als Harzkomponente ungesättigte Polyesterharze (UP-Harze)oder Vinylester-Harze (VE-Harze) eingesetzt. Diese kalthärtenden, radikalisch vernetzbaren Polymerisat-Zusammensetzungen enthalten des Weiteren Monomere mit ethylenisch ungesättigten Gruppen, im Allgemeinen Styrol oder Methacrylatmonomere. Diese Monomere werden der kalthärtenden, radikalisch vernetzbaren Polymerisat-Zusammensetzung zugegeben um das vernetzbare Polymerisat zu lösen und um sicherzustellen, dass die kalthärtende, radikalisch vernetzbare Polymerisat-Zusammensetzung eine fließfähige Masse ist. Zur Initiierung der Vernetzung des ungesättigten Polyester- oder Vinylester-Harzes werden im Allgemeinen als Initiatoren Peroxide oder Hydroperoxide eingesetzt. Für die Kalthärtung werden vorzugsweise noch Beschleuniger eingesetzt um die Zersetzung des Initiators bei diesen niederen Temperaturen zu beschleunigen, beispielsweise Kobaltsalze.

Als weitere Bestandteile enthalten die kalthärtenden, radikalisch vernetzbaren Polymerisat-Zusammensetzungen gegebenenfalls noch Fasermaterialien wie Glasfasern, Carbonfasern, Naturfasern oder entsprechende Fasermatten (Fiber Reinforced Plastic Composites = FRP Composites), die zu einer Verstärkung der durch Aushärtung der radikalisch vernetzbaren Polymerisat-Zusammensetzungen erhältlichen Composite-Bauteile führen.

Kalthärtende, radikalisch vernetzbare Polymerisat-Zusammensetzungen werden auch zur Herstellung von Polymerbeton eingesetzt. Polymerbeton ist ein Oberbegriff für Verbundwerkstoffe aus mineralischen Füllstoffen wie Quarz, Basalt und Granit, Kreide, Blähton, Perlit, welche in bestimmter Korngrößenzusammensetzung (Sieblinie) vorliegen und anstelle von Zement mit einem Gemisch aus Reaktionsharz, Monomer, Initiator und Beschleuniger gebunden sind.

Ein Problem bei der Verarbeitung von radikalisch vernetzbaren Polymerisat-Zusammensetzungen zu verstärkten oder gefüllten Bauteilen und Werkstoffen ist deren Volumenschwund während der Härtung der Polymerisat-Zusammensetzung. Zur Reduzierung des Schrumpfs während der Aushärtung werden deshalb den radikalisch vernetzbaren Polymerisat-Zusammensetzungen Schwindmaß-reduzierende Zusätze, sogenannte Low-Profile-Additive (LPA), zugegeben. Low-Profile-Additive reduzieren das Schrumpfen beim Aushärten, bauen Eigenspannungen ab, verringern Mikrorissbildung, und erleichtern das Einhalten von Fertigungstoleranzen.

Bei den Schwindmaß-reduzierenden Zusätzen (Low-Profile-Additiven) handelt es sich üblicherweise um Thermoplaste wie Polystyrol, Polymethylmethacrylat und insbesondere Polyvinylacetat, welche häufig noch carboxylfunktionelle Comonomereinheiten enthalten. Low-Profile-Additive auf Basis von Vinylacetat und ethylenisch ungesättigten Carbonsäuren sind beispielsweise in der DE-OS 2163089, US 3,718,714 A oder in der WO 2007/125035 A1 beschrieben. Die DE-A 102007055694 offenbart Low-Profile-Additive auf der Basis von Polymeren, die erhalten werden durch Polymerisation von Vinylestern und ethylenisch ungesättigten Epoxy-funktionellen Monomeren und anschließender polymeranaloger Umsetzung der so erhaltenen Polymere mit einer ethylenisch ungesättigten Carbonsäure.

Die beschriebenen Polymere entfalten ihre Wirkung als Schwindmaß-reduzierender Zusatz (LPA) aber nur bei der Härtung von vernetzbaren Polymerisat-Zusammensetzungen unter erhöhten Temperaturen von 60°C und mehr. Bei Raumtemperatur zeigen die gängigen LPAs keine oder keine ausreichende Wirksamkeit. Bei einer Vielzahl von Verfahren zur Herstellung von Composite-Bauteilen, wie dem Hand-Lay-Up-Verfahren oder Infusions- oder Injektionsverfahren, beispielsweise Vacuum Infusion oder RTM-Light, erfolgt die Aushärtung der vernetzbaren Polymerisat-Zusammensetzungen gerade bei solchen niedrigen Temperaturen, beispielsweise bei Raumtemperatur. Auch Polymerbeton wird in der Regel bei Raumtemperatur ausgehärtet.

In der EP 224370 A2 wird eine kalthärtende Polymerbeton-Zusammensetzung beschrieben, welche mittels Abmischen von ungesättigtem Ortho-Polyesterharz, Peroxidvernetzer, mineralischen Füllstoffen und Polystyrolpulver als LPA und anschließender Aushärtung erhalten wird. In der US 6,034,155 A wird eine kalthärtende Polymerbeton-Zusammensetzung beschrieben in der ein Polyester-Polyurethan-Hybridharz als LPA eingesetzt wird.

Die EP 2356159 B1 beschreibt spezielle Propfpolymere, die bereits bei Raumtemperatur als Low Profile Additive wirksam sind. Die technische Herstellung dieser Propfpolymere erfolgt dabei in einer komplexen dreistufigen Umsetzung (freie radikalische Polymerisation, polymeranaloge Umsetzung und abschließende radikalische Propfcopolymerisation), die in der Praxis zu hohen Kosten und zu mangelnder Reproduzierbarkeit der LPA-Wirkung führt, da bereits geringe Variationen in der molekularen Struktur des Propfcopolymeren große Schwankungen in der Wirksamkeit als "Raumtemperatur-LPA" verursachen können.

In der EP 337931 B1 werden als Schwundmaß-reduzierender Zusatz Vinylacetat-Vinylversatat-Copolymere eingesetzt, welche als Dispersionspulver mit einem Anteil an Polyvinylalkohol-Schutzkolloid und inertem Antiblockmittel vorliegen. Nachteilig ist vor allem die hohe Viskosität, welche bei der Abmischung mit Styrol oder UP-Harz resultiert.

Vor diesem Hintergrund bestand die Aufgabe, Low-Profile-Additive (LPA) bereit zu stellen, welche dem Volumenschwund im Zuge der Aushärtung von radikalisch vernetzbaren Polymerisat-Zusammensetzungen entgegenwirken, selbst wenn die Aushärtung bei niedrigen Temperaturen von ≤ 40°C erfolgt, welche gute Verarbeitbarkeit zeigen, das heißt geringe Viskosität in Abmischungen mit Monomer (Styrol) oder UP-Harz, und welche ausgehend von kommerziell verfügbaren Monomeren in einer einfachen direkten Copolymerisation zugänglich sind.

Gegenstand der Erfindung ist die Verwendung von Vinylacetat-Copolymeren als Schwindmaß-reduzierender Zusatz (Low Profile Additiv) in kalthärtenden Systemen zur Herstellung von Verbundwerkstoffen, dadurch gekennzeichnet, dass Vinylacetat-Copolymerisate von 40 bis 95 Gew.-% Vinylacetat und 5 bis 60 Gew.-% von einem oder mehreren Comonomeren aus der Gruppe enthaltend Vinylester von unverzweigten oder verzweigten Carbonsäuren mit 3 bis 20 C-Atomen und Methacrylsäureester und Acrylsäureester von unverzweigten oder verzweigten Alkoholen mit 2 bis 15 C-Atomen verwendet werden, wobei sich die Angaben in Gew.-% auf das Gesamtgewicht der Comonomere beziehen und sich auf 100 Gew.-% aufaddieren.

Kalthärtende Systeme zur Herstellung von Verbundwerkstoffen sind solche radikalisch vernetzbare Polymerisat-Zusammensetzungen, welche bei einer Temperatur von < 60°C, vorzugsweise 0°C bis 50°C, besonders bevorzugt 0°C bis 40°C aushärten.

Als Vinylester von unverzweigten oder verzweigten Carbonsäuren mit 3 bis 20 C-Atomen bevorzugt sind Vinylpropionat, Vinylbutyrat, Vinyl-2-ethylhexanoat, Vinyllaurat, 1-Methylvinylacetat und Vinylester von $\alpha$-verzweigten Monocarbonsäuren mit 5 bis 13 C-Atomen, beispielsweise Vinylpivalat, VeoVa9$^R$, VeoVa10$^R$ oder VeoVa11$^R$ (Handelsnamen der Firma Hexion). Besonders bevorzugt sind Vinyllaurat (Handelsname der Firma Wacker Chemie ist Versa$^R$ 12) und Vinylester von $\alpha$-verzweigten Monocarbonsäuren mit 9 bis 10 C-Atomen (VeoVa9$^R$ und VeoVa10$^R$). Am meisten bevorzugt ist Vinyllaurat (Vinyldodecanoat).

Als Methacrylsäureester und Acrylsäureester von unverzweigten oder verzweigten Alkoholen mit 2 bis 15 C-Atomen bevorzugt sind Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt ist n-Butylacrylat.

Im Allgemeinen werden Copolymere von 40 bis 95 Gew.-%, vorzugsweise 55 bis 95 Gew.-%, Vinylacetat und 5 bis 60 Gew.-%, vorzugsweise 5 bis 45 Gew.-%, der genannten Vinylester und/oder der genannten (Meth)acrylsäureester verwendet, jeweils bezogen auf das Gesamtgewicht der Comonomere zur Herstellung des Vinylacetat-Copolymeren. Am meisten bevorzugt sind Copolymere von 55 bis 95 Gew.-% Vinylacetat mit 5 bis 45 Gew.-%, bezogen auf das Gesamtgewicht der Comonomere, von einem oder mehreren Comonomeren aus der Gruppe enthaltend Vinyllaurat, Vinylester von $\alpha$-verzweigten Monocarbonsäuren mit 9 bis 10 C-Atomen (VeoVa9$^R$, VeoVa10$^R$) und n-Butylacrylat. Am allermeisten bevorzugt sind Copolymere von 55 bis 95 Gew.-% Vinylacetat und 5 bis 45 Gew.-% Vinyllaurat, bezogen auf das Gesamtgewicht der Monomere. Vorzugsweise werden keine weiteren Comonomere als Vinylacetat und die genannten Vinylester und (Meth)acrylsäureester copolymerisiert.

Die Vinylacetat-Copolymere haben zahlenmittlere Molekulargewichte Mn von bevorzugt 2.000 bis 200.000 g/mol, besonders bevorzugt von 4.000 bis 100.000 g/mol und am meisten bevorzugt von 8.000 bis 35.000 g/mol. Die Angaben zu den Molekulargewichten Mn beziehen sich auf die Bestimmungsmethode mittels SEC ("Size Exclusion Chromatography") unter Einsatz eines Polystyrol-Standards in THF bei 60°C.

Die Polymerisation wird im Allgemeinen in Gegenwart von Radikalinitiatoren und mittels radikalischer Substanz- oder Lösungspolymerisationsverfahren durchgeführt. Bei der Durchführung des bevorzugten Lösungspolymerisationsverfahrens werden als Lösungsmittel vorzugsweise ein organisches Lösungsmittel oder ein Gemisch organischer Lösungsmittel oder ein Gemisch von einem oder mehreren organischen Lösungsmitteln und Wasser eingesetzt. Bevorzugte Lösungsmittel oder bevorzugte Lösungsmittelkomponenten in Lösungsmittelgemischen werden ausgewählt aus der Gruppe der Alkohole, Ketone, Ester, Ether, aliphatischen Kohlenwasserstoffe, aromatischen Kohlenwasserstoffe und Wasser. Besonders bevorzugte Lösungsmittel sind aliphatische Alkohole mit 1 bis 6-C-Atomen wie Methanol, Ethanol, n-Propanol oder i-Propanol, Ketone wie Aceton oder Methylethylketon, Ester wie Methylacetat, Ethylacetat, Propylacetat oder Butylacetat oder Wasser. Am meisten bevorzugt sind Methanol, i-Propanol, Methylacetat, Ethylacetat und Butylacetat.

Die Polymerisationstemperatur für die Herstellung der Vinylacetat-Copolymere beträgt 20°C bis 160°C, vorzugsweise 40°C bis 140°C. Im Allgemeinen wird bei Normaldruck unter Rückfluss polymerisiert.

Geeignete Radikalinitiatoren sind beispielsweise öllösliche Initiatoren, wie t-Butylperoxy-2-ethylhexanoat, t-Butylperoxypivalat, t-Butylperoxyneodecanoat, Dibenzoylperoxid, t-Amylperoxypivalat, Di-(2-ethylhexyl)peroxydicarbonat, 1,1-Bis(t-Butylperoxy)-3,3,5-trimethylcyclohexan und Di-(4-t-Butylcyclohexyl)peroxydicarbonat. Geeignet sind auch Azoinitiatoren wie Azobisisobutyronitril. Die Initiatoren werden im Allgemeinen in einer Menge von 0,005 bis 3,0 Gew.-%, bevorzugt 0,01 bis 1,5 Gew.-%, jeweils bezogen auf Gesamtgewicht der Monomere zur Herstellung der Copolymere eingesetzt.

Die Polymerisationsgeschwindigkeit kann durch die Temperatur, die Halbwertszeiten der Initiatoren, durch Verwendung von Initiatorbeschleunigern oder durch die Initiatorkonzentration gesteuert werden.

Die Einstellung des Molekulargewichts und des Polymerisationsgrades ist dem Fachmann bekannt. Diese kann beispielsweise durch Zugabe von Regler, durch das Verhältnis von Lösungsmittel zu Monomeren, durch Variation der Initiatorkonzentration, durch Dosiervariation von Monomeren und durch Variation der Polymerisationstemperatur erfolgen. Regler oder Kettentransfermittel sind zum Beispiel Alkohole, wie Methanol, Ethanol und Isopropanol, Aldehyde oder Ketone, wie Acetaldehyd, Propionaldehyd, Butyraldehyd, Aceton oder Methylethylketon, aber auch mercaptogruppenhaltige Verbindungen, wie Dodecylmercaptan, Mercaptopropionsäure oder mercaptogruppenhaltige Silicone.

Die Polymerisation kann unter Vorlage aller oder einzelner Bestandteile des Reaktionsgemisches, oder unter teilweiser Vorlage und Nachdosierung aller oder einzelner Bestandteile des Reaktionsgemisches, oder nach dem Dosierverfahren ohne Vorlage durchgeführt werden.

Flüchtige Restmonomere und weitere flüchtige Bestandteile können auch mittels Destillation oder Strippverfahren, vorzugsweise unter reduziertem Druck, entfernt werden.

Die Zusammensetzung der Rezepturen für kalthärtende Systeme zur Herstellung von Verbundwerkstoffen sowie die Einsatzmengen der Low-Profile-Additive hängen von dem gewählten Herstellungsverfahren ab und sind dem Fachmann bekannt. Geeignete kalthärtende, radikalisch vernetzbare Polymerisat-Zusammensetzungen enthalten als Grundbestandteile a) mindestens ein vernetzbares, ungesättigtes Polyesterharz (UP-Harz)oder Vinylester-Harz (VE-Harz), b) mindestens ein Monomer mit ethylenisch ungesättigter Gruppe, c) mindestens einen Initiator aus der Gruppe der Peroxide oder Hydroperoxide, d) mindestens einen Beschleuniger, e) gegebenenfalls Fasermaterialien, und f) gegebenenfalls mineralische Füllstoffe.

Im Allgemeinen werden die Vinylacetat-Copolymere als Schwindmaß-reduzierender Zusatz in einer 10 bis 70 Gew.-%-igen Lösung, vorzugsweise in einer 30 bis 50 Gew.-%-igen Lösung, in ethylenisch ungesättigten Monomeren, vorzugsweise Styrol oder Methacrylate wie Methylmethacrylat (MMA), 1,3- Butandioldimethacrylat (1,3-BDDMA) und 1,4-Butandioldimethacrylat (1,4-BDDMA), appliziert. Besonders bevorzugt werden die Vinylacetat-Copolymere in einer 30 bis 50 Gew.-%-igen Lösung in Styrol, 1,4-BDDMA oder 1,3-BDDMA appliziert. Zur Verbesserung der mechanischen Festigkeit nach der Aushärtung können gegebenenfalls 1 bis 20 Gew.-%, bezogen auf Vinylacetat-Copolymer, multifunktionale Acrylate oder Methacrylate wie Trimethylolpropantrimethacrylat (TMPTMA) den Lösungen zugesetzt werden.

Die Einsatzmenge der Vinylacetat-Copolymere als Schwindmaß-reduzierender Zusatz beträgt im Allgemeinen 4 bis 20 Gew.-%, vorzugsweise 10 bis 20 Gew.-%, bezogen auf das Gesamtgewicht an Harz a) und Monomer b) und Vinylacetat-Copolymer.

Als Harz a) geeignete ungesättigte Polyesterharze (UP-Harze) sind im Handel erhältlich und durch Polykondensation von ungesättigten und gesättigten Dicarbonsäuren oder Dicarbonsäureanhydriden mit Polyolen zugänglich. Als Harz a) geeignete Vinylesterharze (VE-Harze) sind im Handel erhältlich und durch Veresterung von Epoxidharzen mit Acryl- oder Methacrylsäure zugänglich.

Die kalthärtenden, radikalisch vernetzbaren Polymerisat-Zusammensetzungen enthalten noch Monomere b) mit ethylenisch ungesättigten Gruppen, im Allgemeinen Styrol oder Methacrylatmonomere wie Methylmethacrylat (MMA) oder 1,3- oder 1,4-Butandioldimethacrylat. Diese Monomere werden der kalthärtenden, radikalisch vernetzbaren Polymerisat-Zusammensetzung zugegeben, um das vernetzbare Polymerisat zu lösen und um sicherzustellen, dass die kalthärtende, radikalisch vernetzbare Polymerisat-Zusammensetzung eine fließfähige Masse ist.

Zur Initiierung der Vernetzung des ungesättigten Polyester- oder Vinylester-Harzes werden in den kalthärtenden, radikalisch vernetzbaren Polymerisat-Zusammensetzungen als Initiatoren c) Peroxide oder Hydroperoxide eingesetzt. Geeignete Peroxide oder Hydroperoxide sowie deren Einsatzmengen sind dem Fachmann bekannt und im Handel erhältlich, beispielsweise Cumolhydroperoxid, Dibenzoylperoxid oder Methylethylketonperoxid.

In den kalthärtenden, radikalisch vernetzbaren Polymerisat-Zusammensetzungen werden vorzugsweise noch Beschleuniger d) eingesetzt um die Zersetzung des Initiators bei diesen niederen Temperaturen zu beschleunigen. Geeignete Beschleuniger sowie deren Einsatzmengen sind dem Fachmann bekannt und im Handel erhältlich, beispielsweise Kobaltsalze wie Kobaltoctoat, Kobaltneodecanoat oder Kobaltnaphtenat.

Die kalthärtenden, radikalisch vernetzbaren Polymerisat-Zusammensetzungen können gegebenenfalls noch weitere Additive wie Fasermaterialien e) oder Füllstoffe f), oder Verarbeitungshilfsmittel wie Verdicker enthalten.

Geeignete Fasermaterialien e) sind beispielsweise Glasfasern, Carbonfasern, Naturfasern oder entsprechende Fasermatten (Fiber Reinforced Plastic Composites = FRP Composites), die zu einer Verstärkung der durch Aushärtung der kalthärtenden, radikalisch vernetzbaren Polymerisat-Zusammensetzungen erhältlichen Composite-Bauteile führen.

Die kalthärtenden, radikalisch vernetzbaren Polymerisat-Zusammensetzungen können auch zur Herstellung von Polymerbeton eingesetzt werden. Polymerbeton ist ein Oberbegriff für Verbundwerkstoffe aus mineralischen Füllstoffen wie Quarz, Basalt, Granit, Kreide, Blähton, Perlit, welche in bestimmter Korngrößenzusammensetzung (Sieblinie) vorliegen und anstelle von Zement mit einem Gemisch aus Reaktionsharz, Initiator und Beschleuniger gebunden sind. Zement wird in Polymerbeton, wenn überhaupt, nur als Füllstoff, zur Erweiterung der Gesteinskörnung in den Feinstkornbereich eingesetzt und übernimmt in Polymerbeton keine Bindewirkung. Häufige Anwendungen für Polymerbeton sind beispielsweise Rohre, Platten, Schächte, Wandsegmente.

Durch die Verwendung der Vinylacetat-Copolymere als Schwindmaß-reduzierender Zusatz (Low Profile Additive), werden ausgehärtete UP- und VE-Harze (Reinharz-Castings), Faser-verstärkte Kunststoffteile oder gefüllte Formmassen und mit UP-Harz oder mit VE-Harz gebundene mineralische Werkstoffe (Polymerbeton) mit deutlich vermindertem Schrumpf oder mit Expansion bei Härtungstemperaturen unterhalb von 60°C, insbesondere bei Härtung bei Raumtemperatur (≤40°C), erhalten.

Die nachfolgenden Beispiele dienen zur weiteren Erläuterung der Erfindung, ohne diese in irgendeiner Weise einzuschränken.

Beispiel 1:

Herstellung eines Vinylacetat-Copolymeren 1

In einem 21-Glasrührtopf mit Ankerrührer, Rückflusskühler und Dosiereinrichtungen wurden 40,0 g Vinylacetat, 21,2 g Vinyllaurat, 22,1 g Isopropanol und 0,5 g PPV (t-Butylperpivalat, 75 %-ige Lösung in Aliphaten) vorgelegt. Anschließend wurde die Vorlage bei einer Rührerdrehzahl von 200 Upm unter Stickstoff auf 70°C aufgeheizt. Nach Erreichen der Innentemperatur von 70°C wurden 200,0 g Vinylacetat, 81,7 g Vinyllaurat, 6,2 g Isopropanol und Initiatorlösung (0,8 g PPV) zudosiert. Die Monomerlösung wurde innerhalb von 240 Minuten und die Initiatorlösung innerhalb von 300 Minuten zudosiert. Nach Ende der Initiatordosierungen wurde noch 3 Stunden bei 80°C nachpolymerisiert. Unter Vakuum und erhöhter Temperatur wurden flüchtige Bestandteile abdestilliert.

Die Höppler-Viskosität des Copolymers, bestimmt nach DIN 53015 (10 % in Ethylacetat bei 20°C), betrug 2,4 mPas, sein zahlenmittleres Molekulargewicht $M_n$ betrug 15000 g/mol, sein gewichtsmittleres Molekulargewicht $M_w$, betrug 55400 g/mol, bestimmt mittels Größenausschlusschromatographie in THF bei 60°C gegenüber engverteilten Polystyrolstandards.

Beispiel 2:

Herstellung eines Vinylacetat-Copolymeren 2

In einem 21-Glasrührtopf mit Ankerrührer, Rückflusskühler und Dosiereinrichtungen wurden 40,0 g Vinylacetat, 21,2 g VeoVa$^R$ 10, 22,1 g Isopropanol und 0,5 g PPV (t-Butylperpivalat, 75 %-ige Lösung in Aliphaten) vorgelegt. Anschließend wurde die Vorlage bei einer Rührerdrehzahl von 200 Upm unter Stickstoff auf 70°C aufgeheizt. Nach Erreichen der Innentemperatur von 70°C wurden 200,0 g Vinylacetat, 81,7 g VeoVa$^R$ 10, 6,2 g Isopropanol und Initiatorlösung (0,8 g PPV) zudosiert. Die Monomerlösung wurde innerhalb von 240 Minuten und die Initiatorlösung innerhalb von 300 Minuten zudosiert. Nach Ende der Initiatordosierungen wurde noch 3 Stunden bei 80°C nachpolymerisiert. Unter Vakuum und erhöhter Temperatur wurden flüchtige Bestandteile abdestilliert.

Die Höppler-Viskosität des Copolymers, bestimmt nach DIN 53015 (10 % in Ethylacetat bei 20°C), betrug 2,5 mPas, sein zahlenmittleres Molekulargewicht $M_n$ betrug 14000 g/mol, sein gewichtsmittleres Molekulargewicht $M_w$, betrug 53400 g/mol, bestimmt mittels Größenausschlusschromatographie in THF bei 60°C gegenüber engverteilten Polystyrolstandards.

Beispiel 3:

Herstellung eines Vinylacetat-Copolymeren 3

In einem Rührkessel wurden 2 kg Isopropanol zusammen mit 33,6 kg Vinylacetat, 8,4 kg Vinyllaurat und 10 g t-Butylperoxo-2-ethylhexanoat vorgelegt und die Polymerisation mittels Aufheizen auf 72°C gestartet. Zum Start wurde nochmal 7 g Butylperoxo-2-ethylhexanoat zugegeben und dann 170 g Butylperoxo-2-ethylhexanoat in 700 g Isopropanol über 6 Stunden zudosiert. 240 Minuten nach dem Start wurde mit der Dosierung von 28 kg Vinylacetat begonnen und die Dosierung über einen Zeitraum von 120 Minuten fortgesetzt. Nach Abschluss der Vinylacetat-Dosierung wurde noch 60 Minuten weitergerührt, die Temperatur auf 120°C erhöht, der Kessel evakuiert und Lösemittel und Restmonomer abdestilliert.

Die Höppler-Viskosität des Copolymers, bestimmt nach DIN 53015 (10 % in Ethylacetat bei 20°C), betrug 5,5 mPas, sein zahlenmittleres Molekulargewicht $M_n$ betrug 14000 g/mol, sein gewichtsmittleres Molekulargewicht $M_w$, betrug 137000 g/mol, bestimmt mittels Größenausschlusschromatographie in THF bei 60°C gegenüber engverteilten Polystyrolstandards.

Testung der Verwendung der Vinylacetatcopolymere als Schwindmaß-reduzierender Zusatz (LPA):

1.) Härtung von UP-Harz-Zusammensetzungen bei 23°C:

Aus den in der Tabelle 1 aufgeführten Rohstoffen wurde eine Mischung hergestellt und kurz entgast. Die Dichte $D_V$ der entgasten Mischung wurde ermittelt, danach wurde die Mischung in eine Form gegossen und bei Raumtemperatur (23°C) für 48 Stunden gehärtet. Schließlich wurde die Dichte $D_H$ des gehärteten Formkörpers bestimmt. Der Schrumpf wurde durch Vergleich der Dichte $D_V$ der Mischung vor dem Aushärten mit der Dichte $D_H$ des Formkörpers nach dem Aushärten mit der Formel Schrumpf (%) = ($D_H$-$D_V$/$D_H$) x 100 ermittelt (Tabelle 2). Minuswerte zeigen an, dass der Formkörper nach dem Aushärten größer als die ursprüngliche Form war.

Die Dichte wurde jeweils mit dem Dichtemessgerät DMA 38 (Hersteller: Anton Paar GmbH) bei Raumtemperatur (23°C) gemessen.

Tabelle 1: Formulierung für Kunststoffformkörper:

| Type | Rohstoff | Gew.-T. |
|---|---|---|
| Palapreg® P18-03 | UP-Harz (ca. 65,0 %-ig in Styrol) | 80,0 |
| LPA | LPA (40 %ig in Styrol) | 20,0 |
| Butanox® M 50 | Peroxid | 1,5 |
| Akzo Nobel NL-49 | Beschleuniger (1 %-ig Co in Ester) | 0,5 |

Als Low-Profile-Additive (LPA) wurden eingesetzt:

LPAV1(Vergleich) :
Vinnapas® C501 (säuremodifiziertes Polyvinylacetat der Wacker Chemie AG).
LPAV2 (Vergleich):
Vinnapas® B 100 SP (Polyvinylacetat der Wacker Chemie AG).
LPAV3 (Vergleich):
Degalan LP 53/13 (säuremodifiziertes Polymethylmethacrylat der Evonik AG).
LPAV4 (Vergleich):
Modiper® SV10 A (säuremodifiziertes Styrol/Vinylacetat-Blockcopolymer der Nippon Oil and Fats Company, Limited).
LPA1:
Vinylacetat-Copolymer 1 mit 70 Gew.-% Vinylacetat und 30 Gew.-% Vinyllaurat
LPA2:
Vinylacetat-Copolymer 2 mit 70 Gew.-% Vinylacetat, 24 Gew.-% VeoVa$^R$10 und 6 Gew.-% Vinyllaurat
LPA3:
Vinylacetat-Copolymer 3 mit 88 Gew.-% Vinylacetat und 12 Gew.-% Vinyllaurat

Tabelle 2: Schrumpf der Formkörper:

| LPA | Dichte $D_V$ der Mischung vor dem Härten [g/mm$^3$] | Dichte $D_H$ des Formkörpers nach Härtung bei 23°C [g/mm$^3$] | Schrumpf [‰] |
|---|---|---|---|
| - | 1,093 | 1,195 | 8,53 |
| LPA1 | 1,055 | 1,047 | -0,76 |
| LPA2 | 1,059 | 1,077 | 1,67 |
| LPA3 | 1,052 | 1,063 | 1,03 |
| LPAV1 | 1,062 | 1,150 | 7,65 |
| LPAV2 | 1,064 | 1,162 | 8,43 |
| LPAV3 | 1,063 | 1,149 | 7,48 |
| LPAV4 | 1,041 | 1,112 | 6,38 |

Aus der Tabelle 2 geht hervor, dass herkömmliche LPAs (LPAV1-LPAV4) bei Raumtemperatur (hier 23°C) nicht bzw. kaum wirksam sind. Die Vergleichssubstanzen LPAV1 bis LPAV4 zeigten gegenüber den erfindungsgemäßen Formulierungen mit Vinylacetat-Copolymeren (LPA1, LPA2 und LPA3) bei der Raumtemperaturhärtung fast keine Wirksamkeit.
Die hydrophoben Vinylacetat-Copolymere LPA1, LPA2 und LPA3 waren dagegen bereits bei 23°C sehr gut wirksam, so dass ein deutlich reduzierter Schrumpf, im Falle von LPA1 sogar leichte Expansion resultierte.

2.) Härtung von Polymerbeton-Zusammensetzungen bei 23°C:

Aus den in der Tabelle 3 aufgeführten Rohstoffen wurde eine Polymerbeton-Mischung hergestellt und die Mischung in eine Form gegossen und bei Raumtemperatur (23°C) für 48 Stunden gehärtet. Dazu wurde die Mischung in eine Silikonform mit den Innenmaßen 10 mm x 50 mm x 1000 mm gefüllt auf deren Boden ein Lochblech (1000 mm x 50 mm x 1 mm) als Gegenzug ausgelegt war. Schrumpft die Polymerbetonmasse während der Härtung so wölbt sich der Probekörper nach oben, wobei die Krümmung mit der Schrumpfung zunimmt. Die Höhe der Krümmung in der Mitte des Probenkörpers gegenüber den Enden des Probekörpers wurde in mm gemessen. Der lineare Schrumpf wurde daraus mit der Formel berechnet:

$$\text{Dicke(mm)} \times \text{Krümmung(mm)} \ / \ 125(\text{mm x m}) = \text{mm/m}.$$

Ein linearer Schrumpf von 1 mm/m entspricht dann 0,1 %.

Tabelle 3 und 4:

Formulierung und Testung für Polymerbetonformkörper:

Tabelle 3:

| Test Run (TR), Bestandteile in Gew.-Teile | TR1 | TR2 | TR3 | TR4 |
|---|---|---|---|---|
| Quarzsand 8a - HR 0,1 - 0,6 T | 26,7 | 26,7 | 26,7 | 26,7 |
| Quarzsand 4extra - HR 1 - 1,8 T | 26,7 | 26,7 | 26,7 | 26,7 |
| Quarzsand F 36 | 26,7 | 26,7 | 26,7 | 26,7 |
| Palatal P61/02 UP-Harz von Aliancys AG | 20 | 17 | 14 | 13 |
| Accelerator NL-49P Co-Beschleuniger von AkzoNobel | 0,5 | 0,1 | 0,1 | 0,1 |
| Curox M-312 Epoxidhärter United Initiators | 1 | 1 | 1 | 1 |
| LPA3-Lösung (40%ig in Styrol) | 0 | 3 | 6 | 7 |
| | | | | |
| Linearer Schrumpf % | 0,43 | 0,20 | 0,08 | 0,03 |

Tabelle 4:

| Test Run (TR), Bestandteile in Gew.-Teile | TR5 | TR6 | TR7 |
|---|---|---|---|
| Quarzsand 8a - HR 0,1 - 0,6 T | 17,5 | 17,5 | 27,5 |
| Quarzsand 4extra - HR 1 - 1,8 T | 0 | 0 | 0 |
| Quarzsand F 36 | 17,5 | 17,5 | 17,5 |
| Palatal P61/02 UP-Harz von Aliancys AG | 25 | 16,25 | 16,25 |
| Accelerator NL-49P Co-Beschleuniger von AkzoNobel | 0,1 | 0,07 | 0,07 |
| Curox M-312 Epoxidhärter United Initiators | 1 | 1 | 1 |
| LPA3-Lösung (40 %ig in Styrol) | 0 | 8,75 | 8,75 |
| Kreide Omyacarb - 40GU von Omya | 40 | 40 | 30 |
| | | | |
| Linearer Schrumpf % | 0,63 | 0,01 | 0,02 |

Diskussion der Ergebnisse:

Das in der Formulierung von Polymerbeton-Formkörpern eingesetzten Vinylacetat-Vinyllaurat-Copolymerisat zeichnet sich dadurch aus, dass die Viskosität in einer 40 Gew.-%-igen Styrollösung nur ca. 1000 mPas beträgt (Brookfield Viskosität bei 23°C, 100 rpm, Spindel 4). Solche niederen Viskositäten sind wesentlich für eine gute Benetzung von Fasern bzw. Füllstoffen, und eine Voraussetzung für Rezepturen mit hohen Feststoff- bzw. Faser-Anteilen. Die in der EP 337931 B1 als Schwundmaß-reduzierender Zusatz erwähnten, redispergierbaren Vinylacetat-Vinylversatat-Copolymere führen dagegen bereits bei einer Konzentration von 20 Gew.-% in Styrol zu einer Viskosität von 100000 mPas und mehr (Brookfield Viskosität bei 23°C, 100 rpm, Spindel 4).

Die Vinylacetat-Copolymerisate wirken bereits bei einem sehr niedrigen Anteil sehr effektiv als Schwindmaß-reduzierender Zusatz in Polymerbeton-Formulierungen. Der Test Run TR3 zeigt, dass bereits bei einem niederen Anteil von 6 Gew.-% eine deutliche Verminderung des Schrumpfs erhalten wird (Gew.-% bezogen auf das Gesamtgewicht an Harz a) und Monomer b) und Vinylacetat-Copolymer).

**Patentansprüche**

1. Verwendung von Vinylacetat-Copolymeren als Schwindmaß-reduzierender Zusatz in kalthärtenden Systemen, welche bei einer Temperatur von < 60°C ausgehärtet werden, zur Herstellung von Verbundwerkstoffen, **dadurch gekennzeichnet, dass** Vinylacetat-Copolymerisate von 40 bis 95 Gew.-% Vinylacetat und 5 bis 60 Gew.-% von einem oder mehreren Comonomeren aus der Gruppe enthaltend Vinylester von unverzweigten oder verzweigten Carbonsäuren mit 3 bis 20 C-Atomen und Methacrylsäureester und Acrylsäureester von unverzweigten oder verzweigten Alkoholen mit 2 bis 15 C-Atomen verwendet werden, wobei sich die Angaben in Gew.-% auf das Gesamtgewicht der Comonomere beziehen und sich auf 100 Gew.-% aufaddieren.

2. Verwendung nach Anspruch 1, **dadurch gekennzeichnet, dass** Copolymerisate von 55 bis 95 Gew.-% Vinylacetat und 5 bis 45 Gew.-% Comonomere, bezogen auf das Gesamtgewicht der Monomere, verwendet werden.

3. Verwendung nach Anspruch 1 oder 2, **dadurch gekennzeichnet, dass** ein Vinylacetat-Copolymerisat von Vinylacetat und einem oder mehreren Comonomeren aus der Gruppe enthaltend Vinyllaurat und Vinylester von $\alpha$-verzweigten Monocarbonsäuren mit 9 bis 10 C-Atomen verwendet wird.

4. Verwendung nach Anspruch 1 bis 3, **dadurch gekennzeichnet, dass** ein Vinylacetat-Copolymerisat von Vinylacetat und einem oder mehreren Comonomeren aus der Gruppe enthaltend Ethylacrylat, Ethylmethacrylat, Propylacrylat, Propylmethacrylat, n-, iso- und t-Butylacrylat, n-, iso- und t-Butylmethacrylat, 2-Ethylhexylacrylat und Norbornylacrylat verwendet wird.

5. Verwendung nach Anspruch 1 bis 4, **dadurch gekennzeichnet, dass** das Vinylacetat-Copolymerisat keine weiteren Comonomere copolymerisiert enthält.

6. Verwendung nach Anspruch 1 bis 5 als Schwindmaß-reduzierender Zusatz in kalthärtenden, radikalisch vernetzbaren Polymerisat-Zusammensetzungen welche als Grundbestandteile a) mindestens ein vernetzbares, ungesättigtes Polyesterharz (UP-Harze)oder Vinylester-Harz (VE-Harze), b) mindestens ein Monomer mit ethylenisch ungesättigter Gruppe, c) mindestens einen Initiator aus der Gruppe der Peroxide oder Hydroperoxide, d) mindestens einen Beschleuniger, e) gegebenenfalls Fasermaterialien, und f) gegebenenfalls mineralische Füllstoffe, enthalten.

7. Verwendung nach Anspruch 6 als Schwindmaß-reduzierender Zusatz mit mineralischen Füllstoffen und gegebenenfalls Zement in Polymerbeton.

8. Kalthärtende, radikalisch vernetzbare Polymerisat-Zusammensetzung, welche bei einer Temperatur von < 60°C ausgehärtet wird, enthaltend

   a) mindestens ein vernetzbares, ungesättigtes Polyesterharz oder Vinylester-Harz,
   b) mindestens ein Monomer mit ethylenisch ungesättigter Gruppe,
   c) mindestens einen Initiator aus der Gruppe der Peroxide oder Hydroperoxide,
   d) mindestens einen Beschleuniger aus der Gruppe der Kobaltsalze,
   e) gegebenenfalls Fasermaterialien, und
   f) gegebenenfalls mineralische Füllstoffe,

**dadurch gekennzeichnet, dass** als Schwindmaß-reduzierender Zusatz ein Vinylacetat-Copolymerisat von 40 bis 95 Gew.-% Vinylacetat und 5 bis 60 Gew.-% von einem oder mehreren Comonomeren aus der Gruppe enthaltend Vinylester von unverzweigten oder verzweigten Carbonsäuren mit 3 bis 20 C-Atomen und Methacrylsäureester und Acrylsäureester von unverzweigten oder verzweigten Alkoholen mit 2 bis 15 C-Atomen enthalten ist, wobei sich die Angaben in Gew.-% auf das Gesamtgewicht der Comonomere beziehen und sich auf 100 Gew.-% aufaddieren.

9.  Kalthärtende, radikalisch vernetzbare Polymerisat-Zusammensetzung nach Anspruch 8 enthaltend
    f) mindestens einen mineralischen Füllstoff aus der Gruppe enthaltend Quarz, Basalt, Granit, Kreide, Blähton, Perlit, Zement.

10. Polymerbeton erhalten mit einer kalthärtenden, radikalisch vernetzbaren Polymerisat-Zusammensetzung nach Anspruch 9.

**Claims**

1.  Use of vinyl acetate copolymers as a shrinkage-reducing admixture in cold-curing systems which are cured at a temperature of < 60°C for producing composite materials, **characterized in that** vinyl acetate copolymers of 40 to 95 wt% vinyl acetate and 5 to 60 wt% one or more comonomers from the group containing vinyl esters of unbranched or branched carboxylic acids having 3 to 20 carbon atoms and methacrylic esters and acrylic esters of unbranched or branched alcohols having 2 to 15 carbon atoms are used, the figures in wt% being based on the total weight of the comonomers and adding up to 100 wt%.

2.  Use according to Claim 1, **characterized in that** copolymers of 55 to 95 wt% vinyl acetate and 5 to 45 wt% comonomers are used, based on the total weight of the monomers.

3.  Use according to Claim 1 or 2, **characterized in that** a vinyl acetate copolymer of vinyl acetate and one or more comonomers from the group containing vinyl laurate and vinyl esters of $\alpha$-branched monocarboxylic acids having 9 to 10 carbon atoms is used.

4.  Use according to Claim 1 to 3, **characterized in that** a vinyl acetate copolymer of vinyl acetate and one or more comonomers from the group containing ethyl acrylate, ethyl methacrylate, propyl acrylate, propyl methacrylate, n-, iso- and tert-butyl acrylate, n-, iso- and tert-butyl methacrylate, 2-ethylhexyl acrylate and norbornyl acrylate is used.

5.  Use according to Claim 1 to 4, **characterized in that** the vinyl acetate copolymer comprises no further comonomers in copolymerized form.

6.  Use according to Claim 1 to 5 as a shrinkage-reducing admixture in cold-curing, radically crosslinkable polymer compositions which comprise as basic constituents a) at least one crosslinkable, unsaturated polyester resin (UP resins) or vinyl ester resin (VE resins), b) at least one monomer with ethylenically unsaturated group, c) at least one initiator from the group of the peroxides or hydroperoxides, d) at least one accelerator, e) optionally fiber materials, and f) optionally mineral fillers.

7.  Use according to Claim 6 as a shrinkage-reducing admixture with mineral fillers and optionally cement in polymer concrete.

8.  Cold-curing, radically crosslinkable polymer composition which is cured at a temperature of < 60°C, comprising

    a) at least one crosslinkable, unsaturated polyester resin or vinyl ester resin,
    b) at least one monomer with ethylenically unsaturated group,
    c) at least one initiator from the group of the peroxides or hydroperoxides,
    d) at least one accelerator from the group of the cobalt salts,
    e) optionally fiber materials, and
    f) optionally mineral fillers,

    **characterized in that** it comprises as shrinkage-reducing admixture a vinyl acetate copolymer of 40 to 95 wt% vinyl acetate and 5 to 60 wt% one or more comonomers from the group containing vinyl esters of unbranched or branched carboxylic acids having 3 to 20 carbon atoms and methacrylic esters and acrylic esters of unbranched or branched alcohols having 2 to 15 carbon atoms, the figures in wt% being based on the total weight of the comonomers and adding up to 100 wt%.

9. Cold-curing, radically crosslinkable polymer composition according to Claim 8, comprising f) at least one mineral filler from the group containing quartz, basalt, granite, chalk, expanded clay, perlite, cement.

10. Polymer concrete obtained with a cold-curing, radically crosslinkable polymer composition according to Claim 9.

**Revendications**

1. Utilisation de copolymères d'acétate de vinyle en tant qu'additif réduisant le retrait dans des systèmes durcissant à froid, qui sont durcis à une température < 60 °C, pour la préparation de matériaux composites, **caractérisée en ce que** des copolymérisats d'acétate de vinyle composés de 40 à 95 % en poids d'acétate de vinyle et de 5 à 60 % en poids d'un ou plusieurs comonomères du groupe contenant des esters vinyliques d'acides carboxyliques non ramifiés ou ramifiés comportant 3 à 20 atomes de C et des esters méthacryliques et des esters acryliques d'alcools non ramifiés ou ramifiés comportant 2 à 15 atomes de C sont utilisés, les données en % en poids se rapportant au poids total des comonomères et s'additionnant à 100 % en poids.

2. Utilisation selon la revendication 1, **caractérisée en ce que** des copolymérisats composés de 55 à 95 % en poids d'acétate de vinyle et de 5 à 45 % en poids de comonomères, par rapport au poids total des monomères, sont utilisés.

3. Utilisation selon la revendication 1 ou 2, **caractérisée en ce qu'**un copolymérisat d'acétate de vinyle composé d'acétate de vinyle et d'un ou plusieurs comonomères du groupe contenant le laurate de vinyle et des esters vinyliques d'acides monocarboxyliques ramifiés en $\alpha$ comportant 9 à 10 atomes de C est utilisé.

4. Utilisation selon les revendications 1 à 3, **caractérisée en ce qu'**un copolymérisat d'acétate de vinyle composé d'acétate de vinyle et d'un ou plusieurs comonomères du groupe contenant l'acrylate d'éthyle, le méthacrylate d'éthyle, l'acrylate de propyle, le méthacrylate de propyle, l'acrylate de n-butyle, l'acrylate d'iso-butyle, et l'acrylate de t-butyle, le méthacrylate de n-butyle, le méthacrylate d'iso-butyle, et le méthacrylate de t-butyle, l'acrylate de 2-éthylhexyle et l'acrylate de norbornyle est utilisé.

5. Utilisation selon la revendication 1 à 4, **caractérisée en ce que** le copolymérisat d'acétate de vinyle ne contient aucun autre comonomère copolymérisé.

6. Utilisation selon la revendication 1 à 5 en tant qu'additif réduisant le retrait dans des compositions de polymérisat durcissant à froid, réticulables par voie radicalaire qui contiennent en tant qu'ingrédients de base a) au moins une résine polyester (résine UP) ou résine d'ester vinylique (résine VE) réticulable, insaturée, b) au moins un monomère doté de groupes éthyléniquement insaturés, c) au moins un initiateur du groupe des peroxydes ou des hydroperoxydes, d) au moins un accélérateur, e) éventuellement des matériaux fibreux, et f) éventuellement des charges minérales.

7. Utilisation selon la revendication 6 en tant qu'additif réduisant le retrait comportant des charges minérales et éventuellement du ciment dans du béton polymère.

8. Composition de polymérisat durcissant à froid, réticulable par voie radicalaire, qui est durcie à une température < 60 °C, contenant

a) au moins une résine polyester ou résine d'ester vinylique réticulable, insaturée,
b) au moins un monomère doté de groupes éthyléniquement insaturés,
c) au moins un initiateur du groupe des peroxydes ou des hydroperoxydes,
d) au moins un accélérateur du groupe des sels de cobalt,
e) éventuellement des matériaux fibreux, et
f) éventuellement des charges minérales,

**caractérisée en ce qu'**en tant qu'additif réduisant le retrait, un copolymérisat d'acétate de vinyle composé de 40 à 95 % en poids d'acétate de vinyle et de 5 à 60 % en poids d'un ou plusieurs comonomères du groupe contenant des esters vinyliques d'acides carboxyliques non ramifiés ou ramifiés comportant 3 à 20 atomes de C et des esters méthacryliques et des esters acryliques d'alcools non ramifiés ou ramifiés comportant 2 à 15 atomes de C est contenu, les données en % en poids se rapportant au poids total des comonomères et s'additionnant à 100 % en poids.

9. Composition de polymérisat durcissant à froid, réticulable par voie radicalaire selon la revendication 8 contenant f) au moins une charge minérale du groupe contenant le quartz, le basalte, le granité, la craie, l'argile expansée, la perlite, le ciment.

10. Béton polymère obtenu avec une composition de polymérisat durcissant à froid, réticulable par voie radicalaire selon la revendication 9.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE OS2163089 A
- US 3718714 A
- WO 2007125035 A1
- DE 102007055694 A
- EP 224370 A2
- US 6034155 A
- EP 2356159 B1
- EP 337931 B1